# EUROPEAN PATENT APPLICATION

(11) **EP 0 937 390 A2**
(43) Date of publication of application: **25.08.1999**
(21) Application number: 99300356.5
(22) Date of filing: 19.01.1999
(51) Int. Cl.: A01K 97/04

(54) **Bait bag for fishing**

(30) Priority: 17.02.1998 GB 9803354
(71) Applicant: Kureha Chemical Industry Co., Ltd., Tokyo 103 (JP); Unitika Hanbai Co., Ltd., Osaka (JP)
(72) Inventor: Nakagawa, Takabumi, Matsudo-shi, Chiba-ken (JP); Toya, Kazutoshi, Jyoyo-shi, Kyoto-fu (JP); Tsujimoto, Kimio, Ikoma-gun, Nara-ken (JP)
(74) Representative: JENSEN & SON

(57) **Abstract**

A bait bag for fishing. This bait bag is formed of a bag body knitted from water soluble filaments (4) in a mesh structure with each mesh side being 2 - 15 mm. The opening portion in the bag body has a cord (6) knitted thereat which cord can close the opening (3).

## Description

### FIELD OF THE INVENTION

The present invention relates to a bait bag for fishing.

### BACKGROUND OF THE INVENTION

In fishing in a river, lake or pond, a bait bag with bait put therein is immersed in water to attract fish.

A bait bag of this kind is known which is produced by being knitted from a yarn of water soluble filaments on a circular knitting machine into a tubular knitted fabric of dense plain knitted structure and heat-sealing the lower end of said tubular knitted fabric to form a bag. Since this bait bag itself is water soluble, it disappears some time after it is immersed in water to present the bait around the baited fishing hooks to attract fish, providing the advantage of improving the fishing results.

However, such tubular knitted fabric is densely knitted as described above in order to increase the strength of the heat sealed portion, offering a problem that the dissolving rate in water is low. Further, in the heat sealed portion, the fiber has been changed into a film, so that the strength has been reduced. A further problem is that plain knitted fabrics tend to run. As a result, when the bag with bait put therein is thrown into water, there is a very fair possibility that the bait is scattered as a result of the weight of the bait tearing the heat sealed portion or a run taking place in the bag. Also there is even a problem that the filming decreases the dissolving rate in water.

Further, this kind of bait bag makes it necessary to close its opening by tying it with a cord after putting bait in the bag and to tie it to the front end of the fishing line by using said cord before the bag can be immersed in water. Therefore, such cord has to be separately prepared, involving the time to look for the cord; thus, there is a problem that the operation of closing the opening and the operation of tying are attended with difficulty.

### DISCLOSURE OF THE INVENTION

An object of the present invention, which is intended to solve such problems, is to propose a bait bag which quickly dissolves in water, which has a sufficient strength and which facilitates the operation of closing the bag opening and tying the bag to the fishing line.

To achieve this object, a bait bag for fishing according to the invention is formed of a bag body knitted from a yarn of water soluble filaments in a mesh structure with each mesh side being 2 - 25 mm, the bottom of said bag being closed by knitting, the opening portion in said bag body having a cord knitted thereat to close the latter.

With such arrangement, since the bottom of the bag body is closed by knitting, its strength is greater than when it is closed by heat seal and hence it is possible to prevent the occurrence of a situation in which the bag body tears when thrown into water.

Further, since the opening in the bag body has the cord knitted thereat, it follows that the bag body and the cord are integrally knitted, so that the use of said cord facilitates the operation of closing the opening in the bag body and tying the bag body to the fishing line. Furthermore, since it is arranged that the opening can be closed by the cord, any type of bait that suits the situation of a particular fishing place may be put in the bag through the opening, whereupon the opening can be closed; thus, the bag is very convenient.

Since the bag body is produced by being knitted from a yarn of water soluble filaments such that it is of mesh structure with each mesh side being 2 - 25 mm, it is less dense than a bag body densely knitted on a circular knitting machine. Therefore, it has the advantage of being quickly dissolved when immersed in water.

### BRIEF DESCRIPTION OF THE DRAWINGS

Fig. 1 is a front view of a bait bag for fishing according to an embodiment of the present invention;
Fig. 2 is a sectional view taken along the line II-II in Fig. 1;
Fig. 3 is a sectional view taken along the line III-III in Fig. 1;
Fig. 4 is a sectional view taken along the line IV-IV in Fig. 1;
Fig. 5 is a view showing how said bait bag is used;
Fig. 6 is an enlarged view of one mesh of said bait bag;
Fig. 7 is a front view of an embodiment showing a plurality of bait bags formed in a serial connection;
Fig. 8 is a view for explaining an example of the number of meshes in said bait bag;
Fig. 9 is a view showing an example of the yarn disposition of the bait bag shown in Fig. 8;
Fig. 10 is a perspective view of a bait bag for fishing according to another embodiment of the invention;
Fig. 11 is a view showing how the bait bag shown in Fig. 10 is used; and
Fig. 12 is a perspective view of a bait bag according to still another embodiment of the invention.

### DESCRIPTION OF EMBODIMENTS

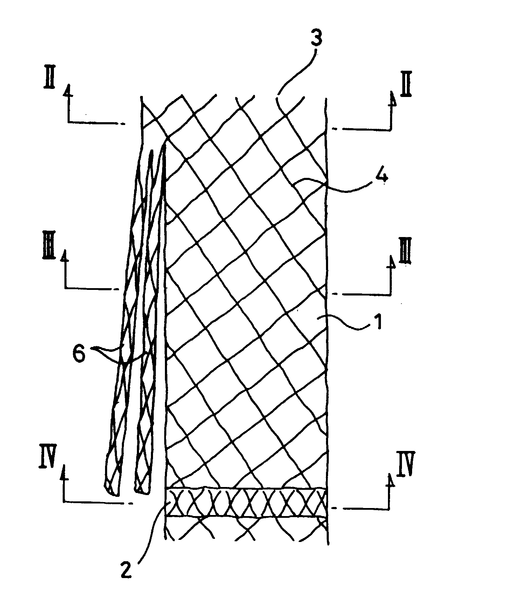

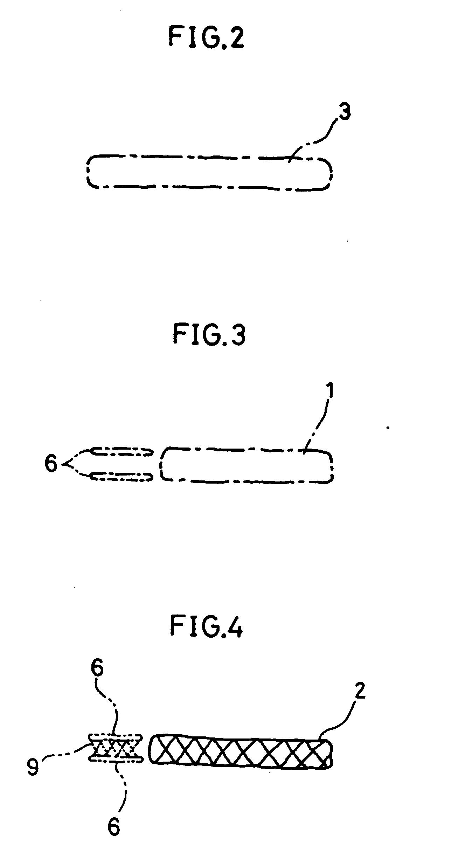

In a bait bag shown in Fig. 1, the numeral 1 denotes a main body whose bottom 2 is closed, with an opening 3 formed in its top. The main body 1 is knitted in a mesh structure as shown in Fig. 1 and cylindrically shaped as shown in Fig. 3.

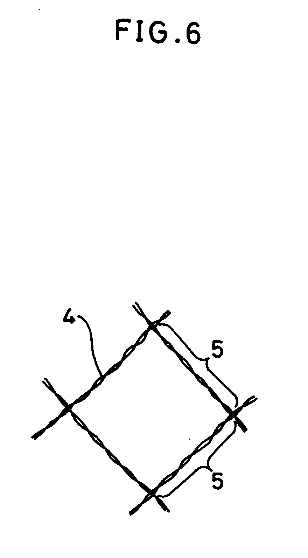

As shown in Figs. 1 and 6, each mesh is formed in a quadrangular shape by a yarn composed of a plurality of water soluble filaments. The term "water soluble" used herein means being soluble in water at ordinary temperatures. Each mesh is formed such that each side 5 thereof is 2 - 25 mm. If each side 5 is less than 2 mm, the meshes are too small, makina it impossible to obtain the required dissolving rate. Reversely, if it is greater than 25 mm, the meshes are too large, leading to the danger of the bait falling through the meshes. Thus, 5 - 15 mm is more preferable.

In Particular, the yarn 4 is composed of water soluble vinylon filaments. As for such yarn 4, a yarn sold under the name of "Solvron" by NITIVY Co., Ltd. may be used. Said company also supplies a yarn 4 which is 56 deniers, for example, composed of 18 filaments. The fineness of the yarn 4 is suitably in the range of 20 - 200 deniers in order to achieve the required water solubility and strength. A range of 40 - 100 deniers is more preferable.

Instead of water soluble vinylon, the yarn 4 may be composed of other water soluble fibers, such as protein fiber or casein fiber.

As shown in Figs. 1 and 4, the bottom 2 is closed by the knitting of the yarn 4.

Extending from the portion of the opening 3, a pair of cords 6 are knitted separately from the main body 1. These cords 6 are of the same mesh structure as the main body 1 and has substantially the same length as the main body 1. That is, these cords 6 are connected at their proximal ends to the portion of the opening 3 and their distal ends are free ends. Thus, as shown in Fig. 2, the opening 3 is larger in size than the main body 1, and as shown in Figs. 1 and 3, before it is used by the user, the cords 6 are disposed laterally of the main body 1.

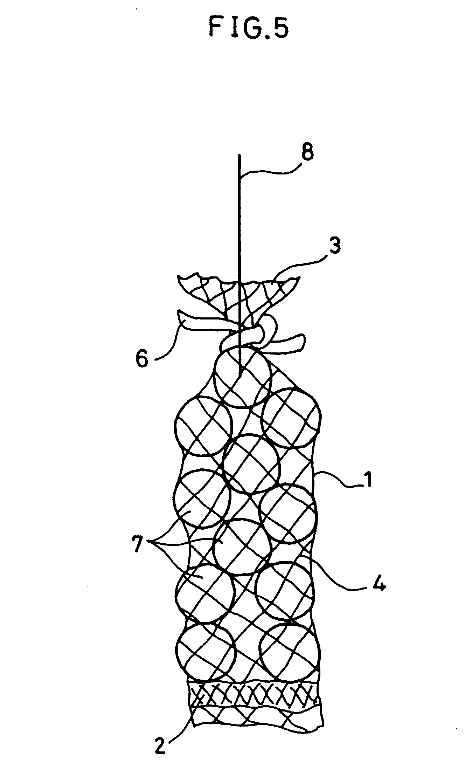

To use this bait bag, as shown in Fig. 5, bait 7 is packed into the main body 1 through the opening 3. This bait 7 is shaped, for example, spherical as shown, and the length of each side of the meshes 5 is so sized as to prevent the bait 7 from falling. And the opening 3 of the main body 1 with the bait 7 put therein is closed by being tied with the cords 6 and the main body is fastened to the front end of the fishing line 8 by said cords 6.

Arranged in this manner, the main body 1 is of sparse mesh structure, so that there is an advantage that its dissolving rate in water is very much high as compared with that of known dense plain knitted bait bags.

For the meshes, besides the aforesaid quadrangular shape, other shapes, such as hexagon, may be employed.

Since the bottom 2 of the main body 1 is closed by the knitting of the yarn 4, there are advantages that its strength is high as compared with known bait bags closed by heat seal and that it will not tear even when it is thrown with bait 7 put therein into water.

Since a pair of cords 6 are formed integral with the main body 1, there is an advantage that there is no need to separately prepare a cord for tying the opening 3 for closure and the main body 1 to the front end of the fishing line 8.

In producing the bait bag of the present invention, it is recommendable to use, as the yarn 4, for example, 56-denier "Solvron" composed of 18 filaments as above mentioned, and as a knitting machine, a 18 G/inch double raschel machine made by Karl Mayer Co., Ltd., the knitting conditions being, for example, 280 rpm, 2.5 mm for each stitch. Thereby, the bait bag of mesh structure having 5-mm mesh sides 5 each being of two stitches.

An experimental example using a bait bag of the present invention thus produced and a known bait bag will now be described. As the known bait bag, a plain knitted bag was used which was produced by using 56-denier "Solvron" formed of 18 filaments serving as a yarn, and as a knitting machine, a 18 G/inch circular knitting machine made by KOIKE MACHINE W. Co. LTD. In that case, for the known bait bag, it took 1 minute and 46 seconds for the bait to start falling into water at 10°C and 4 minutes and 31 seconds for the bag to completely dissolve in water. In contrast thereto, for the bait bag of the present invention, it took only 25 seconds for the bait to start falling into water which was also at 10°C and 2 minutes and 55 seconds for the bag to completely dissolve in water.

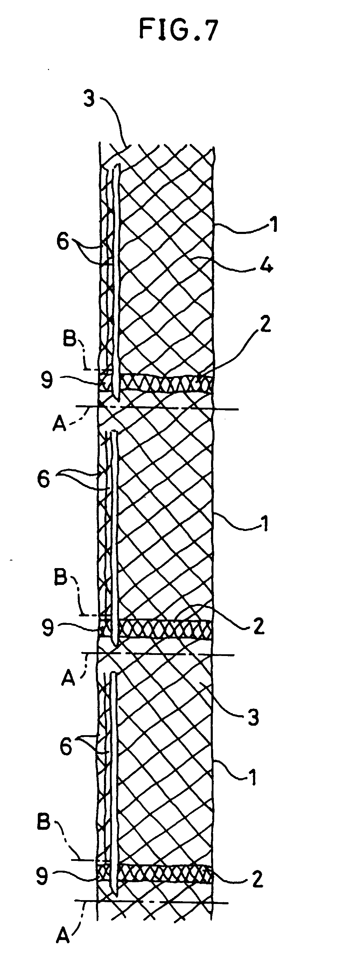

The bag body constituting bait bags of the present invention is knitted, as shown in Fig. 7, such that with the main body 1 and cords 6 separated from each other, a plurality of such bags are longitudinally connected. That is, it is knitted such that as shown, the adjoining bag body bottom 2 and opening 3 are connected. For the convenience of knitting process, it is knitted such that the front ends of the cords 6 are closed by the knitting of the yarn 4 in the same manner as in the bottom 2. The numeral 9 denotes a knitted portion therefor. And individual bait bags are formed in that the opening 3 of the bag body next to the knitted portion formed of yarn 4 in the bottom 2 of a completed knitted product is cut along a line A in the vicinity of the bottom 2. At this time, the cords 6 are cut along a line B located adjacent the knitted portion 9 so that their front ends are free ends.

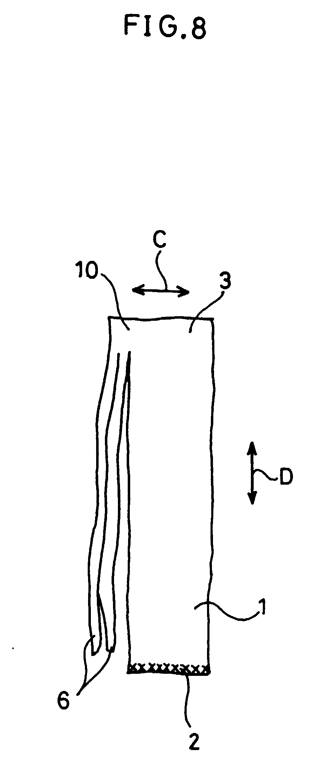

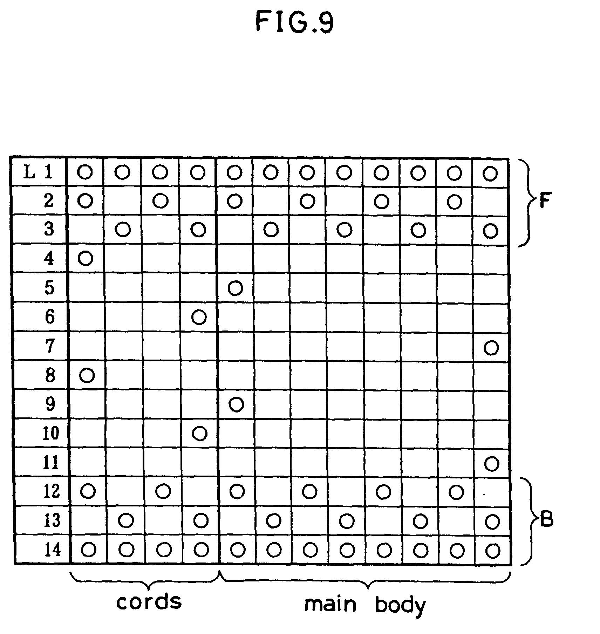

Alternatively, a product may be completed with a plurality of bag bodies knitted in series as shown in Fig. 7 to allow the user to cut them along the lines A and B in use. Fig. 8 shows an example of the number of stitches of the meshes of a bait bag produced under the above conditions. The main body 1 has 8 stitches in the transverse direction C and 33 stitches in the longitudinal direction D. The bottom 2 is formed by bar-like half-stitches. The joint portion 10 between the main body 1 and the cords 6 is formed by 3 stitches for B and 3 stitches for F. Fig. 9 shows examples of yarn disposition for knitting the bait bag of Fig. 8.

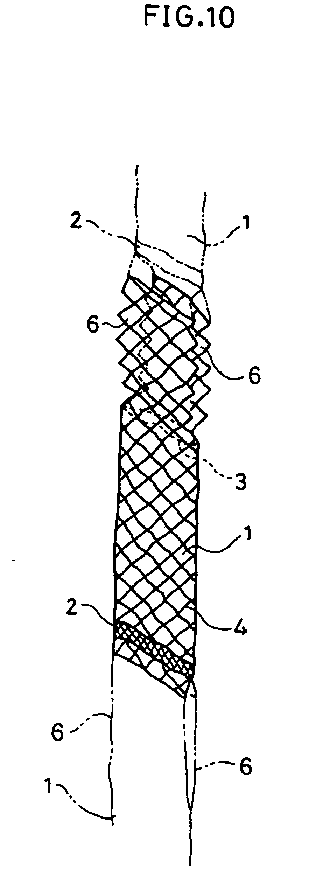

Fig. 10 shows a bait bag according to another embodiment of the invention. In this embodiment, a pair of bifurcated cords 6 integrally extending from the main body 1 are formed. The cut between the cords 6 is disposed at a position corresponding to the sides of the main body 1.

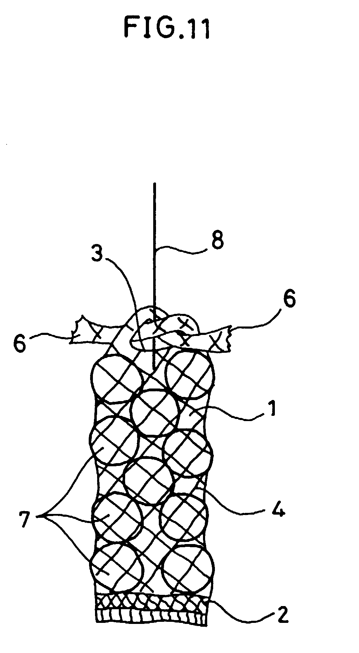

When this bait bag is used, as shown in Fig. 11, the opening in the main body 1 with bait 7 put therein is closed in that it is tied by the cords 6 connected to the main body 1 and the latter is connected to the front end of the fishing line 8 by said cords 6.

As shown in Fig. 10, the bag body constituting bait bags is knitted such that a plurality of bait bags are longitudinally connected as in the case of the bait bags shown in Fig. 7. At this time, it is knitted such that the cords 6 are separated from each other. And individual bait bags are formed in that the bag body is cut between the adjoining bag body bottom 2 and cords 6. In this case also, as in the preceding embodiment, a product may be completed with a plurality of bag bodies knitted in series as shown in Fig. 7 to allow the user to cut them in use.

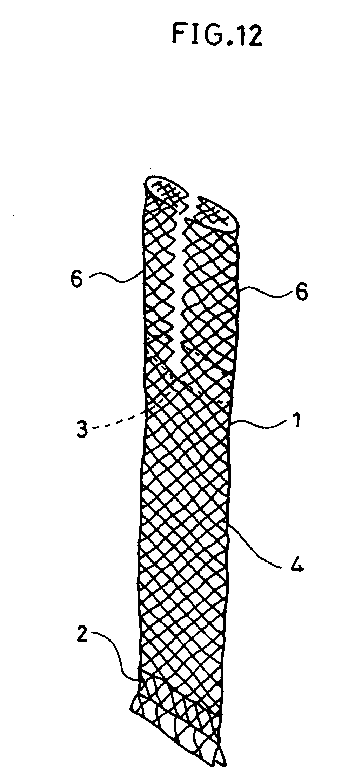

Fig. 12 shows a bait bag according to still another embodiment of the invention. In this embodiment, the cut between the cords 8 is centrally formed in one surface and the other surface of the main body 1. The rest of the arrangement and the manner of use are the same as in the embodiments shown in Figs. 10 and 11.

## Claims

1. A bait bag for fishing characterized in that it is formed as a bag body by being knitted from a yarn of water soluble filaments in a mesh structure with each mesh side being 2 - 25 mm, the bottom of said bag body being closed by knitting, the opening portion in said bag body having a cord knitted thereat which is capable of closing said opening.

2. A knitted fabric for forming the bait bag described in Claim 1, characterized in that a plurality of bait bags are knitted such that connected to the bottom of one bait bag is the opening portion in another bait bag, the individual bags being adapted to be cut off from each other in use.

3. A bait bag as set forth in Claim 1, characterized in that before use, the cord is disposed laterally of the bag body.

4. A knitted fabric for forming the bait bag described in Claim 3, characterized in that a plurality of bait bags are knitted such that connected to the bottom and the front end of the cord of one bait bag is the opening portion in another bait bag, the individual bags being adapted to be cut off from each other in use.

5. A bait bag as set forth in Claim 1, characterized in that before use, the cord is formed such that the cord extends integrally from said bag body adjacent the opening portion in the bag body.

6. A knitted fabric for forming the bait bag described in Claim 5, characterized in that a plurality of bait bags are knitted such that connected to the bottom of one bait bag is the cord of another bait bag, the individual bags being adapted to be cut off from each other in use.

7. A bait bag as set forth in Claim 1, 3 or 5, characterized in that each mesh is quadrangular or hexagonal.

8. A bait bag as set forth in Claim 1, 3, 5 or 7, characterized in that the fineness of the yarn is 20 - 200 deniers.
